# EUROPÄISCHE PATENTANMELDUNG

(11) **EP 2 375 869 A2**
(43) Veröffentlichungstag der Anmeldung: **12.10.2011**
(21) Anmeldenummer: 11161289.1
(22) Anmeldetag: 06.04.2011
(51) Int. Cl.: H05B 37/02, H05B 33/08

(54) **Verfahren und Anordnung zum Betreiben einer in ihrer Lichtabgabe veränderlichen Lichtquelle**

(30) Priorität: 09.04.2010 DE 102010003806
(71) Anmelder: Zumtobel Lighting GmbH, 6850 Dornbirn (AT)
(72) Erfinder: Swoboda, Gerald, 6911 Lochau (AT)
(74) Vertreter: Thun, Clemens

(57) **Zusammenfassung**

Bei einem Verfahren zum Betreiben einer Lichtquelle (50), deren Lichtabgabe veränderbar ist, erfolgt das Ansteuern der Lichtquelle (50) über ein von einem Benutzer zu betätigendes Bedienelement (10), wobei ferner ein Steuergerät (20) vorgesehen ist, welches dazu ausgebildet ist, der Lichtquelle (50) Steuerinformationen über das Stromversorgungsnetz (40) zu übermitteln, und wobei die Lichtquelle (50) bei Aktivierung über das Bedienelemente (10) die von dem Steuergerät (20) übermittelte Informationen berücksichtigt.

## Beschreibung

Die vorliegende Erfindung betrifft ein Verfahren sowie eine Anordnung zum Betreiben einer Lichtquelle, deren Lichtabgabe veränderbar ist. Bei der zu betreibenden Lichtquelle kann es sich insbesondere um eine in ihrer Farbe oder Farbtemperatur veränderliche LED-Lichtquelle handeln.

Als Ergebnis der fortschreitenden Entwicklung der letzten Jahre werden LED zunehmend auch zu Beleuchtungszwecken eingesetzt. Die mit Hilfe von LED erzielbaren Lichtstärken sind mittlerweile ausreichend hoch, so dass LEDs in nahezu sämtlichen Anwendungsfällen bislang verwendete klassische Lichtquellen wie beispielsweise Glühbirnen oder Leuchtstofflampen ersetzen können. Ein weiterer Vorteil bei der Verwendung von LEDs besteht darin, dass diese sehr gute Möglichkeiten bieten, die Lichtabgabe zu verändern bzw. zu modifizieren. Moderne Lichtquellen auf LED-Basis bieten beispielsweise die Möglichkeit, die Farbe oder Farbtemperatur des abgegebenen Lichts zu wählen. Auch ein Dimmen von LED-Lichtquellen ist ohne Weiteres möglich.

Ein besonderer Anwendungsfall dieser neuartigen LED-Lichtquellen sind sogenannte Retrofit-Glühbirnen. Es handelt sich hierbei um Lichtquellen auf LED-Basis, welche die Form und Fassung einer klassischen Glühbirne aufweisen. Derartige Retrofit-Glühbirnen können also in einfacher Weise in die für Glühbirnen vorgesehenen Fassungen eingeschraubt und dort als neuartige Lichtquelle genutzt werden.

Es ergibt sich in derartigen Fällen nunmehr oftmals die Situation, dass die neuartige Lichtquelle umfangreiche Möglichkeiten zur Beeinflussung der Lichtabgabe bietet, diese allerdings von den Benutzern nicht effektiv genutzt werden können. Grund hierfür sind die in ihren Ansteuerrnöglichkeiten beschränkten vorhandenen Bedieneinrichtungen, die bislang für die Ansteuerung von Leuchten mit Glühbirnen genutzt wurden. Insbesondere im Heimbereich beschränken sich derartige Geräte im Wesentlichen auf einfache Schalter zum Ein- und Ausschalten der Leuchten sowie auf Dimmer. Mit derartigen Bedieneinrichtungen können allerdings selbstverständlich keine komplexen Steuerinformationen generiert werden, über welche die Farbe oder Farbtemperatur des abgegebenen Lichts verändert wird. Ein Ersetzen der vorhandenen Bedienelemente durch neuartige Steuergeräte wäre allerdings mit einem extrem hohen Aufwand verbunden.

Der vorliegenden Erfindung liegt deshalb die Aufgabe zu Grunde, eine neuartige Lösung anzubieten, welche es ermöglicht, insbesondere auch im Heimbereich die neuartigen Funktionalitäten moderner Lichtquellen effektiv nutzen zu können.

Die Aufgabe wird durch ein Verfahren zum Betreiben einer Lichtquelle gemäß Anspruch 1 sowie durch eine Anordnung zum Betreiben einer Lichtquelle gemäß Anspruch 6 gelöst. Vorteilhafte Weiterbildungen der Erfindung sind Gegenstand der abhängigen Ansprüche.

Grundgedanke der vorliegenden Erfindung ist, dass die bislang bestehende Technik zum Ansteuern der Lichtquellen, also beispielsweise die bislang genutzten Lichtschalter oder Dimmer beibehalten werden können. Um nunmehr allerdings die Möglichkeiten der modernen Lichtquelle nutzen zu können, kommt erfindungsgemäß ein zusätzliches Steuergerät zum Einsatz. Dieses ist dazu ausgebildet, der Lichtquelle über das Stromversorgungsnetz neue Informationen zu übermitteln, wobei die Lichtquelle dann bei Aktivierung über das Bedienelement die von dem Steuergerät übermittelten Informationen ergänzend berücksichtigt.

Gemäß der vorliegenden Erfindung wird dementsprechend ein Verfahren zum Betreiben einer Lichtquelle, deren Lichtabgabe veränderbar ist, vorgeschlagen, wobei das Ansteuern der Lichtquelle über ein von einem Benutzer zu betätigendes Bedienelement erfolgt und wobei ferner ein Steuergerät vorgesehen ist, welches dazu ausgebildet ist, der Lichtquelle Steuerinformationen über das Stromversorgungsnetz zu übermitteln, wobei die Lichtquelle bei Aktivierung über das Bedienelement die von dem Steuergerät übermittelten Informationen berücksichtigt.

Ferner wird gemäß der vorliegenden Erfindung eine Anordnung zum Betreiben einer Lichtquelle vorgeschlagen, welche ein von einem Benutzer zu betätigendes Bedienelemente zum Ansteuern der Lichtquelle sowie ein Steuergerät aufweist, welches dazu ausgebildet ist, der Lichtquelle Steuerinformationen über das Stromversorgungsnetz zu übermitteln, wobei die Lichtquelle dazu ausgebildet ist, bei Aktivierung über das Bedienelement die von dem Steuerelement übermittelten Informationen zu berücksichtigen.

Der Benutzer der erfindungsgemäßen Anordnung kann also die neuartige Lichtquelle wie in bislang gewohnter Weise mit Hilfe seiner ihm zur Verfügung stehenden Bedienelemente aktivieren und eventuell dimmen. Ergänzende Informationen hingegen, welche zum Nutzen des erweiternden Funktionsumfangs der Lichtquelle erforderlich sind, werden von dem separaten erfindungsgemäßen Steuergerät geliefert. Dadurch, dass diese Informationen über das Stromversorgungsnetz mittels der sogenannten Powerline-Carrier- Technologie übermittelt werden, ist zum Nutzen der erfindungsgemäßen Anordnung lediglich erforderlich, das neuartige Steuergerät an das Stromversorgungsnetz anzuschließen, beispielsweise in eine Steckdose einzustecken. Weitere Maßnahmen hingegen sind nicht erforderlich, sodass mit einem sehr geringen Installationsaufwand sofort die neuartigen Möglichkeiten der Lichtquelle genutzt werden können. Die erfindungsgemäße Lösung ist dementsprechend auch einfach und kostengünstig zu realisieren.

Gemäß einer bevorzugten Ausführungsform der vorliegenden Erfindung beinhalten die von dem Steuergerät übermittelbare Informationen eine lnformation hinsichtlich der Farbe oder Farbtemperatur des von der Lichtquelle abzugebenden Lichts. Ein besonders bevorzugtes Ausführungsbeispiel wäre dann, dass das Steuergerät derartige Informationen an die Lichtquelle übermittelt, dass die spektrale Zusammensetzung des abgegebenen Lichts in Abhängigkeit von einem vorgegebenen Zeitschema derart gewählt wird, dass in einem vordefinierten Zeitraum besonderes Licht abgegeben wird, das hinsichtlich seiner spektralen Zusammensetzung und Intensität derart ist, dass es bei einem Betrachter eine Ausschüttung des Hormons Melatonin zumindest weitestgehend nicht hemmt. Bei Festlegung dieses vorab definierten Zeitraums können dabei die Zeiten von Sonnenuntergängen und / oder Sonnenaufgängen genutzt werden.

Basis dieser bevorzugten Ausführungsform ist, dass Untersuchungen ergeben haben, dass das zur Verfügung stehende Licht einen nicht unwesentlichen Einfluss auf den Melatonin-Haushalt des Menschen hat. Wenn ein Mensch nachts Kunstlicht ausgesetzt wird, besteht im Allgemeinen die Möglichkeit, dass die Melatonin-Ausschüttung durch das Kunstlicht negativ beeinflusst wird, insbesondere gehemmt wird. Die sich hierdurch ergebende reduzierte Melatonin-Abgabe in das Blut des Menschen hat unerwünschte Auswirkungen zur Folge, beispielsweise eine Reduzierung der Schlafqualität oder eine Schwächung des Immunsystems. Der unerwünschte Effekt ist umso deutlicher ausgeprägt, je intensiver das Licht ist, da diese sog. Melatonin-Supression mit zunehmender Helligkeit ansteigt. Ferner hängt der Einfluss des Lichts auf den Melatonin-Haushalt auch von der spektralen Zusammensetzung des Lichts ab. Diese Erkenntnisse sind beispielsweise in der DE 10 2006 037 222 A1 der Anmelderin beschrieben. In dieser Anmeldung wird vorgeschlagen, eine Leuchte derart anzusteuern, dass insbesondere zu Nachtzeiten das abgegebene Licht lediglich innerhalb eines bestimmten Wellenlängenbereichs liegt bzw. eine bestimmte Farbtemperatur aufweist.

Derartige Maßnahmen können nunmehr auch mit der erfindungsgemäßen Anordnung vollzogen werden, indem durch das Steuergerät abhängig von der Tageszeit der Lichtquelle Steuerinformationen zugeführt werden, die zur Folge haben, dass bei einem Aktivieren der Lichtquelle durch den Benutzer das Licht den medizinischen bzw. chronobiologischen Anforderungen des Menschen Rechnung trägt. Insbesondere nachts wird also dann automatisch durch die Lichtquelle Melatonin-schonendes Licht abgeben, welches keine störenden Außenwirkungen auf das nicht-visuelle System des Menschen hat.

Ergänzend bzw. alternativ zur Vorgabe der Farbe bzw. Farbtemperatur könnte allerdings auch vorgesehen sein, dass die von dem Steuergerät übermittelten Steuerinformationen eine Intensität für die Lichtquelle vorgeben. Sollte in diesem Fall das bereits vorhandene Bedienelemente lediglich ein einfacher Schalter sein, so könnte auf diesem Wege auch ein Dimmen der Lichtquelle ermöglicht werden. Dabei können die Steuerinformationen automatisch bzw. selbstständig durch das Steuergerät erzeugt werden. Alternativ hierzu könnte allerdings das Steuergerät auch noch zusätzliche Eingabe- oder Bedienelemente aufweisen, über welche der Benutzer unmittelbar Einfluss auf die zu übermittelnden Steuerinformationen nehmen kann.

Grundsätzlich wird allerdings bei allen Varianten der erfindungsgemäße Vorteil erhalten, dass an der bestehenden Hausleittechnik zum Ansteuern der Lichtquelle keine Änderungen vorgenommen werden müssen. Es ist lediglich das - sehr einfach durchzuführende - Anschließen des zusätzlichen Steuergeräts an das Stromversorgungsnetz erforderlich.

Nachfolgend soll anhand der beiliegenden Zeichnung die Erfindung näher erläutert werden. Es zeigen:
- Fig. 1: schematisch die Ausgestaltung einer erfindungsgemäßen Anordnung zum Ansteuern einer Lichtquelle und
- Fig. 2: die Ansicht einer mit der erfindungsgemäßen Anordnung ansteuerbaren Lichtquelle.

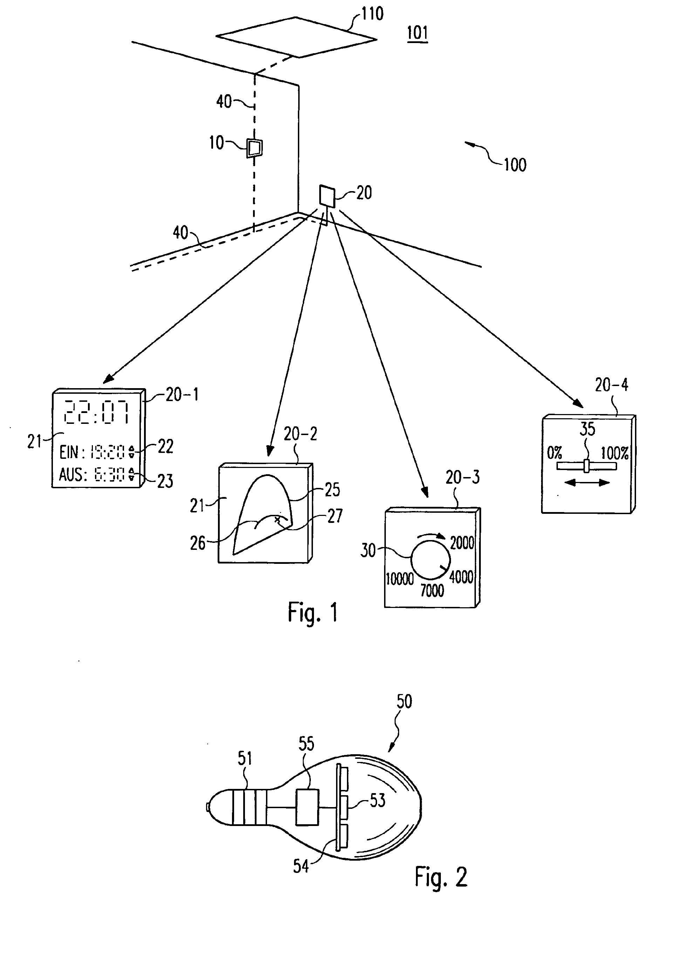

Nachfolgend soll zunächst anhand von Fig. 2 eine Lichtquelle erläutert werden, welche gemäß der vorliegenden Erfindung betrieben bzw. angesteuert werden kann. Es handelt sich um eine sogenannte LED-Retrofil-Glühbime, welche klassische Glühbirnen ersetzen soll. Vorab ist allerdings anzumerken, dass das erfindungsgemäße Verfahren nicht auf derartige Retrofit-Glühbirnen beschränkt ist, sondern grundsätzlich bei allen Arten von Lichtquellen eingesetzt werden kann, welche in ihrer Lichtabgabe durch die Übermittlung entsprechender Steuerbefehle beeinflusst werden können.

Die in Fig. 2 dargestellte und allgemein mit dem Bezugszeichen 50 versehene Retrofit-Glühbirne weist entsprechend ihrem Namen die Form und das äußere Erscheinungsbild einer klassischen Glühbirne auf. Dementsprechend ist ein Sockel 51 mit einem Schraubgewinde vorgesehen, der das Einsetzen in eine klassische Glühbirnen-Fassung ermöglicht. An den Sockel 51 schließt sich ein birnenförmiger Körner 52 an, über dessen Fläche - zumindest teilweise - eine Lichtabgabe erfolgt. Als Lichtquellen dienen im Inneren des birnenförmigen Körpers 52 befindliche LEDs 53, welche auf einer gemeinsamen Platine 54 angeordnet sind. Bei den LEDs 53 handelt es sich vorzugsweise um verschiedenfarbige Leims, beispielsweise in den Farben rot, grün und blau. Je nach Intensität des von den verschiedenfarbigen LEDs abgegebenen Lichts ergibt sich dann ein Mischlicht eines bestimmten Farbtons bzw. einer bestimmten Farbtemperatur. Dieses Mischlicht wird über den vorderen Bereich des birnenförmigen Körpers 52 abgegeben. Der hintere Bereich des Körpers 52 ist oftmals als Kühlkörper zum Abführen der von den LEDs 53 generierten Wärme ausgebildet.

Die Ansteuerung der LEDs 53 erfolgt hierbei über eine Steuereinheit 55, welche über den Sockel 51 mit dem Stromversorgungsnetz verbunden ist. Die Steuereinheit 50 versorgt die LEDs 53 mit einer geeigneten Betriebsspannung, wobei diese beispielsweise als pulsweitemoduliertes Signal ausgeführt sein kann. Durch eine Veränderung der Pulsweite besteht dann in einfacher Weise die Möglichkeit, die Helligkeit der einzelnen LEDs 53 zu beeinflussen. Auf diesem Wege kann die Steuereinheit 55 die Farbe bzw. Farbtemperatur sowie die Intensität des von der Retrofit-Glühbirne 50 abgegebenen Lichts beeinflussen. Letztendlich kann Licht in eine nahezu beliebigen Farbe bzw. Farbtemperatur generiert werden.

Kommen nunmehr derartige Retrofit-Glühbirnen als Ersatz für klassische Glühbirnen zum Einsatz, so ergibt sich das Problem, dass die vielfältigen Möglichkeiten zum Beeinflussen der Lichtabgabe durch den Benutzer oftmals gar nicht genutzt werden können, da ihm hierzu keine geeigneten Bedieneinheiten zur Verfügung stehen. Bei dem in Fig. 1 dargestellten Ausführungsbeispiel ist eine Leuchte 110 dargestellt, die an der Decke 101 eines zu beleuchtenden Raums 100 angeordnet ist. Diese Leuchte 110 soll nunmehr mit derartigen Retrotit-Glühbirnen 50 bestückt werden als Ersatz für klassische Glühbirnen. Während bei der Verwendung klassischer Glühbirnen ein einfacher Lichtschalter 10 - bzw. gegebenenfalls ein Dimmer - ausreichend war, so bietet dieser Schalter 10 nunmehr nicht ansatzweise die Möglichkeit, die verschiedenen Funktionen der neuartigen Retrofit-Glühbirnen 50 auszuschöpfen. Nach wie vor wäre mit Hilfe des Schalters 10 lediglich ein Ein- und Ausschalten der Leuchte 110 möglich, allerdings keine Auswahl der Farbe oder Farbtemperatur.

Die erfindungsgemäße Lösung dieses Problems beruht auf der Nutzung eines zusätzlichen Steuergeräts 20, welches ergänzende Steuerinformationen an die in der Leuchte 110befindlichen Lichtquellen 50 übermittelt. Die Verbindung zwischen Steuergerät 20 und Leuchte 110 bzw. Lichtquellen 50 erfolgt hierbei über das Stromversorgungsnetz 40, wie in Fig. 1 angedeutet ist. Zum Anschließen des Steuergeräts 20 an das Stromversorgungsnetz 40 ist dieses in einfacher Weise derart ausgestaltet, dass es in eine vorhandene Steckdose eingesetzt werden kann. Die Übermittlung von Signalen über das Stromversorgungsnetz 40 an die Lichtquellen erfolgt dann mittels der bekannten Powerline-Technologie, bei der durch Modulation der Stromversorgungsspannung Signale übermittelt werden. Diese Signale werden von der Steuereinheit 55 der Retrofit-Glühbirne 50 ausgewertet und beim Ansteuern der LEDs 53berücksichtigt.

In Fig. 1 sind beispielhaft vier verschieden ausgestaltete Steuereinheiten 20-1 - 20-4 dargestellt, um die sich bietenden Möglichkeiten zu verdeutlichen. Jede Variante ermöglicht eine unterschiedliche Art der Nutzung des Funktionsumfangs der Lichtquelle und soll nachfolgend näher beschrieben werden.

Bei der ersten Variante des Steuergeräts 20-1 ist dieses dazu vorgesehen, die Lichtabgabe der Lichtquelle 50 derart zu beeinflussen, dass zu bestimmten Zeiten Licht abgegeben wird, welches den Melatonin-Haushalt eines Betrachters der Leuchte 110 nicht negativ beeinflusst. Hierzu sollte zu Ruhezeiten, also insbesondere in der Nacht, Licht abgegeben werden, welches eine Farbtemperatur aufweist, die unterhalb eines festgelegten Schwellenwerts liegt. Beispielsweise könnte zu Nachtzeiten vorgesehen sein, dass die Farbtemperatur des abgegebenen Lichts maximal etwa 2000 K, vorzugsweise weniger als 1500 K beträgt.

Im dargestellten Ausführungsbeispiel ist nunmehr also das Steuergerät 20-1 dazu ausgebildet, innerhalb eines vordefinierten Zeitraums eine Steuerinformation auf das Stromversorgungsnetz 40 zu geben, welche zur Folge hat, das bei einem Einschalten der Leuchte 110 durch den Schalter 10 die Lichtquellen 50 das zuvor beschriebene Melatonin-schonende Licht abgeben. Intern weist hierzu das Steuergerät 20-1 einen entsprechenden Zeitgeber auf, die aktuelle Uhrzeit wird beispielsweise auf einem an der Vorderseite befindlichen Display 21 dargestellt. Gleichzeitig erfolgt im unteren Bereich des Displays 21 eine Anzeige, über die erkennbar ist, zu welchem Zeitpunkt (hier 19:20) der Nachtzeitraum beginnt. Auch das Ende des Nachtzeitraums (hier 6:30) wird angezeigt. Es bestehen nunmehr verschiedene Möglichkeiten, den Beginn und das Ende des Nachtzeitraums festzulegen. Im dargestellten Ausführungsbeispiel sind hierzu an den entsprechenden Anzeigen Taster 22, 23 vorgesehen, über welche der Benutzer manuell die Zeitpunkte verändern kann. Denkbar wäre allerdings auch, dass das Steuergerät 20-1 selbstständig auf Basis der aktuellen Uhrzeit, der geographischen Position sowie des Datums die Zeitpunkte des Sonnenuntergangs und Sonnenaufgangs berechnet und darauf basierend den Nachtzeitraum festlegt. Schließlich könnte auch mit Hilfe eines integrierten Sensors oder einem externen Sensor die Helligkeit des Außenlichts berücksichtigt werden.

Unabhängig davon allerdings, in welcher Weise der Nachtzeitraum festgelegt wird, nimmt das Steuergerät 20-1 in geeigneter Weise Einfluss auf die Lichtabgabe der Lichtquelle 50.

Ein zweiter Anwendungsfall des erfindungsgemäßen Steuergeräts besteht darin, die Farbe oder Farbtemperatur manuell vorzugeben. Im dargestellten Ausführungsbeispiel weist hierzu das Steuergerät 20-2 ein als Touchscreen ausgebildetes Display 21 auf, auf dem ein Farbdiagramm 25 dargestellt ist, in dem nochmals gesondert der sogenannte Plancksche Kurvenzug 26 hervorgehoben ist. Dieser definiert den Bereich, in dem das Licht als weißes Licht allerdings mit verschiedener Farbtemperatur wahrgenommen wird. Um eine gewünschte Farbe bzw. Farbtemperatur für die Lichtquellen einzustellen, muss nunmehr der Benutzer lediglich einen entsprechenden Punkt innerhalb des Farbdiagramms 25 anwählen, der im dargestellten Ausführungsbeispiel durch ein Kreuz 27 symbolisiert ist. Dadurch ergibt sich eine einfache und intuitive Möglichkeit, die Farb- bzw. Farbtemperatursteuerung der Lichtquelle vorzunehmen. Dieser Farb- bzw. Farbtemperaturwert wird dann von dem Steuergerät 20-2 vorgegeben, so dass der Benutzer später lediglich über den Schalter 10 die Leuchte 110 ein- oder ausschalten muss. Auch in diesem Fall kann der neue erweiterte Funktionsumfang der Lichtquelle 50 in einfacher Weise genutzt werden, ohne dass ein Austausch des vorhandenen Lichtschalters 10 erforderlich wäre.

Bei einem dritten Ausführungsbeispiel des Steuergeräts 20-3 soll eine Beeinflussung der Farbtemperatur vorgenommen werden. In diesem Fall ist an der Vorderseite des Steuer-Geräts ein Drehknopf 30 angeordnet, über den innerhalb eines vorgegebenen Bereichs eine gewünschte Farbtemperatur ausgewählt werden kann. Wie zuvor wird die hieraus resultierende Steuerinformation auf das Stromversorgungsnetz 40 gegeben und steht dann für die Lichtquellen 50 zur Verfügung.

Schließlich könnte das erfindungsgemäße Konzept auch in einfacher Weise lediglich dazu genutzt werden, bei Vorhandensein eines einfachen Lichtschalters 10 trotz allem ein Dimmen der Leuchte 110 vorzunehmen. Die vierte Variante des Steuergeräts 20-4 weist hierzu einen Schieber 35 auf, über den ein Dimmwert erzeugt werden kann, der wiederum von einem Steuergerät 20-4 an die Leuchte 110 übermittelt wird, derart, dass nach Einschalten über den Lichtschalter 10 die gewünschte Helligkeit eingestellt wird.

Allen zuvor beschriebenen Varianten ist gemeinsam, dass die Leuchte 110 bzw. die zugehörigen Lichtquellen 50 wie bislang üblich über einen einfachen Lichtschalter 10 aktiviert werden können. Die ergänzenden Informationen, die zum Nutzen des erweiterten Funktionsumfangs erforderlich sind, werden über das zusätzliche Steuergerät 20 generiert. Damit können die neuartigen Funktionen der Lichtquellen in einfacher Weise genutzt werden, ohne dass umfangreiche Umbauten oder Ergänzungen des vorhandenen Haushaltsystems erforderlich wären. Selbstverständlich können dabei die zuvor beschriebenen verschiedenen Varianten auch miteinander kombiniert werden.

## Patentansprüche

1. Verfahren zum Betreiben einer Lichtquelle (50), deren Lichtabgabe veränderbar ist, wobei das Ansteuern der Lichtquelle (50) über ein von einem Benutzer zu betätigendes Bedienelement (10) erfolgt,
wobei ferner ein Steuergerät (20) vorgesehen ist, welches dazu ausgebildet ist, der Lichtquelle (50) Steuerinformationen über das Stromversorgungsnetz (40) zu übermitteln,
und wobei die Lichtquelle (50) bei Aktivierung über das Bedienelemente (10) die von dem Steuergerät (20) übermittelten Informationen berücksichtigt.

2. Verfahren nach Anspruch 1,
**dadurch gekennzeichnet,**
**dass** die von dem Steuergerät (20) übermittelte Information eine Farbe oder Farbtemperatur für die Lichtquelle (50) vorgibt.

3. Verfahren nach Anspruch 1 oder 2,
**dadurch gekennzeichnet,**
**dass** die von dem Steuergerät (20) übermittelte Information eine Intensität für die Lichtquelle (50) vorgibt.

4. Verfahren nach einem der vorherigen Ansprüche,
**dadurch gekennzeichnet,**
**dass** die von dem Steuergerät (20) übermittelte Information tageszeitabhängig ist.

5. Verfahren nach einem der vorherigen Ansprüche,
**dadurch gekennzeichnet,**
**dass** die von dem Steuergerät (20) übermittelte Information von einer Eingabe eines Benutzers abhängig ist.

6. Anordnung zum Betreiben einer Lichtquelle (50), aufweisend ein von einem Benutzer zu betätigendes Bedienelement (10) zum Ansteuern der Lichtquelle (50),
ein Steuergerät (20), welches dazu ausgebildet ist, der Lichtquelle (50) Steuerinformationen über das Stromversorgungsnetz (40) zu übermitteln,
wobei die Lichtquelle (50) dazu ausgebildet ist, bei Aktivierung über das Bedienelemente (10) die von dem Steuergerät (20) übermittelten Informationen zu berücksichtigen.

7. Anordnung nach Anspruch 6,
**dadurch gekennzeichnet,**
**dass** die von dem Steuergerät (20) übermittelte Information eine Farbe oder Farbtemperatur für die Lichtquelle (50) vorgibt.

8. Anordnung nach Anspruch 6 oder 7,
**dadurch gekennzeichnet,**
**dass** die von Steuergerät (20) übermittelte Information eine Intensität für die Lichtquelle (50) vorgibt.

9. Anordnung einem der Ansprüche 6 bis 8,
**dadurch gekennzeichnet**,
die von dem Steuergerät (20) übermittelte Information tageszeitabhängig ist.

10. Anordnung nach einem der Ansprüche 6 bis 9,
**dadurch gekennzeichnet,**
**dass** das Steuergerät (20) ein Eingabeelement, insbesondere einen Touchscreen, Taster und/oder einen Drehknopf aufweist.
